# EUROPÄISCHE PATENTSCHRIFT

(11) **EP 4 062 749 B1**
(45) Veröffentlichungstag und Bekanntmachung des Hinweises auf die Patenterteilung: **14.08.2024**
(21) Anmeldenummer: 22162387.9
(22) Anmeldetag: 16.03.2022
(51) Int. Cl.: A01G 9/029, A01G 9/02, A01C 1/02, A01G 31/02, A01G 31/06

(54) **VORRICHTUNG UND VERFAHREN ZUR AUFZUCHT VON PFLANZEN**
DEVICE AND METHOD FOR CULTIVATING PLANTS
DISPOSITIF ET PROCÉDÉ DE CULTURE POUR PLANTES

(30) Priorität: 24.03.2021 DE 102021107313
(43) Veröffentlichungstag der Anmeldung: 28.09.2022
(73) Patentinhaber: Heron Innovations Factory GmbH, 6850 Dornbirn (AT)
(72) Erfinder: BEER, Christian, 6858 Schwarzach (AT)
(74) Vertreter: Riebling, Peter

(56) Entgegenhaltungen:
- JP-A- 2018 121 550
- KR-B1- 101 898 590
- US-A- 4 620 390
- US-A- 5 664 370
- US-A1- 2008 295 400
- US-A1- 2016 198 654

## Beschreibung

Die Erfindung betrifft eine Vorrichtung zur Aufzucht von Pflanzen nach dem Oberbegriff des Anspruches 1 und Verfahren zur Aufzucht von Pflanzen nach dem Oberbegriff der Ansprüche 13, 14 und 15.

Ein solche Vorrichtung zur Aufzucht von Pflanzen kann beispielsweise bei einer vertikalen Landwirtschaft eingesetzt werden. Unter dem Begriff vertikale Landwirtschaft (engl. vertical farming) wird die Kultivierung von Pflanzen in geschlossenen Räumen, auf mehreren übereinanderliegenden Etagen unter natürlichem bzw. künstlichem Licht verstanden. Bei den Pflanzen handelt es sich um Nutzpflanzen, wie beispielsweise Obst und Gemüse, welche ganzjährig angebaut und geerntet werden. Dies wird insbesondere durch eine künstliche Beleuchtung, eine Klimasteuerung und eine gesteuerte Nährstoffversorgung erreicht.

Die vertikale Landwirtschaft benötigt deutlich weniger Grundfläche, da die Pflanzen in mehrstöckigen Gebäuden (sogenannten Farmscrapers) angebaut werden, welche nahe an Ballungsgebieten der Städte errichtet werden. Dadurch werden lange Transportwege von den Anbaugebieten zu den Verbrauchern vermieden. Weitere Vorteile sind die Steigerung der Nutzpflanzenproduktion, der Schutz vor Witterungseinflüssen, ein ressourcenschonender Anbau, die Wassereinsparung durch geschlossene Wasserkreisläufe, sowie die Nutzung von erneuerbaren Energien. Auf den Einsatz von Pestiziden und Fungiziden kann aufgrund der fehlenden Umwelteinflüsse ebenfalls verzichtet werden.

Bei der Hydrokultur handelt es sich um eine Anbaumethode, bei der die Pflanzen nicht in der Erde wurzeln, sondern in Behältern, in denen sie mit einem Substrat (bspw. Kokosfaser oder Steinwolle etc.) fixiert werden. Hydroponik ist eine Form der Hydrokultur und wird zum planmäßigen Anbau von Nutzpflanzen und Zierpflanzen eingesetzt. Bei einem hydroponischen System hängen die Wurzeln der Pflanze in einem Gemisch aus Wasser und darin gelösten Nährstoffen. Die Pflanze wird in der Regel durch eine Pflanzfläche, wie z.B. ein Substrat oder ein Wachstumsmedium im Pflanzenbehälter fixiert. Die Versorgung der Pflanzen mit Wasser und Nährstoffen erfolgt über ein computergesteuertes Kreislaufsystem.

Unter dem Begriff Aeroponik wird eine Hydroponik-Anbaumethode verstanden, bei welcher die Pflanzen ohne ein Wachstumsmedium, wie z.B. Erde kultiviert werden. Die Wurzeln der Pflanze hängen dabei unterhalb einer Pflanzfläche frei in der Luft und werden in regelmäßigen Abständen mit einer Wasser-Nährstofflösung besprüht. Dies bewirkt eine Erhöhung des Sauerstoffgehalts im Wurzelsystem, was sich wiederum positiv auf das Pflanzenwachstum auswirkt.

Die Stecklinge bzw. jungen Pflanzen benötigen im Anfangsstadium wenig Platz in den Pflanzbehältern. Es können somit viele kleine Pflänzchen in einem Pflanzbehälter eingesetzt werden. Mit zunehmendem Wachstum der Pflänzchen wird jedoch der Pflanzbehälter zu klein, so dass sich die Pflanzen gegenseitig beschatten. Durch das Vereinzeln der Pflanzen wird eine bessere Belichtung der Pflanzen erreicht. Eine gute Belichtung während des Wachstums der Pflanzen spielt damit eine wichtige Rolle, denn mit einer guten Belichtung lässt sich der Gemüseertrag und Pflanzenertrag maximieren und die Pflanzen bleiben gesünder. Aufgrund des hohen Energiebedarfs durch die künstliche Belichtung, wird durch eine dichtere Anbaumethode zudem weniger Energie pro Pflanze verbraucht. Wichtig ist, dass jedes Photon des künstlichen Lichtes möglichst auf eine grüne Fläche (Blätter etc.) der Pflanze trifft.

Ein weiterer, wichtiger Faktor bei der vertikalen Landwirtschaft spielt die Automatisierung, denn die automatisierten Produktionsstätten können nicht nur den Mangel an Feldarbeitskräften ausgleichen, sondern es kann auch 24 Stunden, 7 Tage kostengünstig und ressourcenschonend auf einer geringen Grundfläche frisches Gemüse angebaut und geerntet werden.

Bei der automatisierten Produktion werden Transportroboter eingesetzt, welche die einzelnen Pflanzbehälter bzw. Pflanzen innerhalb des Regallagers bewegen. Es werden aber auch Roboter eingesetzt, welche die einzelnen Pflanzen aus den Pflanzbehältern entnehmen und diese in größere Behälter umpflanzen. Aus dem Stand der Technik sind bereits solche Roboter bekannt, welche die Pflanzbehälter durch die Anlage bewegen und einzelne Pflanzen aus dem Pflanzbehälter entnehmen.

Mit der US 2019/0021238 A1 wird beispielsweise ein Verfahren zum automatischen Umverteilen von Pflanzen in einer landwirtschaftlichen Einrichtung offenbart. Ein mobiles Robotersystem liefert ein erstes Pflanzmodul und ermittelt die Dichte der Pflanzen innerhalb des Pflanzmoduls. In Abhängigkeit von der ermittelten Dichte werden dann mit Hilfe eines Roboters gezielt einzelne Pflanzen aus dem ersten Pflanzmodul entnommen und in ein zweites Pflanzmodul eingesetzt. Im Anschluss daran werden dann die Pflanzmodule wieder zurück in das Anbauregal gebracht. Durch den Umsetzvorgang können die Wurzeln der Pflanzen beschädigt werden. Die US 9,854,750 B2 offenbart ein Verfahren und ein System zur automatisierten kommerziellen Zucht und Produktion von Pflanzen in kontrollierter Umgebung. Die Pflanzen werden künstlich belichtet und mit Nährstoffen versorgt und befinden sich in Pflanzschalen, welche in einem Behälter angeordnet sind. Je nach Wachstumsabschnitt und Pflanzengröße werden die einzelnen Pflanzen automatisiert umgepflanzt.

Bei den bekannten Systemen für eine vertikale Landwirtschaft stellt der sehr hohe Stromverbrauch den größten Kosten- und Umweltfaktor dar. Der Stromverbrauch entsteht hauptsächlich durch die Beleuchtung und Klimatisierung. Beide Faktoren hängen von der Lichtfläche ab. Darüber hinaus ist das automatisierte Vereinzeln der Pflanzen bzw. das automatisierte Umsetzen der Pflanzen sehr komplex. Teilweise sind die Pflanzen fest mit der Pflanzfläche verwurzelt und werden beim Vereinzeln von dem Roboter unsanft herausgerissen und dadurch beschädigt.

Aus der Druckschrift US 8,7872,948 B2 ist bereits eine Vorrichtung zur Aufzucht von Pflanzen bekannt, bei welcher eine faltbare Pflanzfläche eingesetzt wird, welche sich auf dem Boden befindet und ausziehbar ausgebildet ist. Die Pflanzfläche kann durch das Auseinanderziehen an die jeweilige Pflanzengröße angepasst werden kann. Durch das Auseinanderziehen wird jedoch der Umfang der Pflanzfläche ständig verändert, so dass für die Aufzucht der Pflanzen unterschiedliche Pflanzflächengrößen vorhanden sind. Solche stationäre Pflanzflächen lassen sich nur schwer beleuchten, wobei die Beleuchtung aufwändig ist und mit hohen Energiekosten verbunden ist.

Mit der Druckschrift US 5,664,370 wird eine Aufzuchtvorrichtung für Pflanzen offenbart, bei welcher eine Vielzahl von Pflanzaufnahmen streifenförmig angeordnet sind, wobei die parallelen, nebeneinandergeordneten Streifen durch einen faltenbaren Abschnitt miteinander verbunden sind.

Aufgabe der Erfindung ist es daher, den Energieverbrauch der Anlage zu reduzieren und die Produktivität der Anlage zu verbessern.

Zur Lösung der gestellten Aufgabe ist die Erfindung durch die technische Lehre des Anspruches 1, 13, 14 und 15 gekennzeichnet.

Die erfindungsgemäße Vorrichtung ist vorzugsweise als transportabler Pflanzbehälter ausgebildet, welcher eine faltbare Pflanzfläche aufweist, die an die Wachstumsphase der Pflanzen angepasst wird. Dadurch besteht der Vorteil, dass die durchschnittliche Pflanzenzahl pro m² Licht erhöht wird, wodurch Stromkosten eingespart werden.

Die faltbare Pflanzfläche ist in dem Innenraum des Pflanzbehälters anordnenbar. Dies bedeutet, dass die Pflanzfläche entweder fix in dem Innenraum angeordnet ist oder in den Pflanzbehälter eingesetzt oder auch wieder aus dem Pflanzbehälter entnommen werden kann.

Bei einer ersten bevorzugten Ausführungsform ist die Vorrichtung als einseitig offener, durch umlaufende, randseitige Wände abgegrenzter transportabler Pflanzbehälter ausgebildet, in dessen Bodenraum eine Nährstofflösung zur Aufzucht der Pflanzen angeordnet ist, wobei der Bodenraum nach oben durch die Pflanzfläche mindestens teilweise abgedeckt ist.

Bei einer weiteren bevorzugten Ausführungsform ist die faltbare Pflanzfläche als elastischer Faltenbalg ausgebildet. Unter dem Begriff Faltenbalg wird eine Pflanzfläche verstanden, welche als eine in Falten liegende, elastische, ausziehbare Fläche ausgebildet ist. Der Faltenbalg kann beispielsweise aus Kunststoff, Stoff oder einem anderen, faltbaren Material bestehen. Durch die Aneinanderreihung der gefalteten Flächen und aufgrund der durchgehend verbundenen Faltenspitzen wird eine hohe Formstabilität erreicht.

Bei einer weiteren bevorzugten Ausführungsform besteht die faltbare Pflanzfläche aus einzelnen Platten, welche durch eine Gelenkverbindung miteinander verbunden sind.

Die faltbare Pflanzfläche wird vorzugsweise gefaltet in den Pflanzbehälter eingesetzt. Zwischen den Falten befinden sich die einzelnen Stecklinge bzw. Pflanzen, wobei in dem Faltental (=Faltengrund) mindestens eine Öffnung vorhanden ist, durch welche die Wurzeln des Stecklings bzw. die Wurzeln von der Pflanze durchsteckbar sind. Die Wurzeln befinden sich somit unterhalb der Pflanzfläche und der Pflanzenspross befindet sich oberhalb der Pflanzfläche.

Bei einer weiteren bevorzugten Ausführungsform weist die faltbare Pflanzfläche Falten und einen horizontalen Steg auf. Zwischen den beiden Falten befindet sich somit ein Steg, welcher über Gelenkverbindungen mit den beiden angrenzenden Falten verbunden ist. Die Falten und der Steg sind vorzugsweise plattenförmig ausgebildet. Der horizontale Steg ist somit ein plattenförmiger Pflanzsteg, welcher bevorzugt die Öffnungen für die Pflanzen aufweist, wobei die Pflanzen eben aufliegen. Durch die beiden angrenzenden Falten erhalten die jungen Pflanzen einen zusätzlichen, seitlichen Halt.

Während der Wachstumsphase der Pflanzen wird die Pflanzfläche nach und nach ziehharmonikaartig auseinandergezogen, wodurch sich der Winkel zwischen den einzelnen Falten immer weiter öffnet. Dadurch erhalten die Pflanzen seitlich mehr Platz und können besser belichtet werden. Durch das Auseinanderziehen der gefalteten Pflanzfläche findet gleichzeitig ein vertikales Anheben der Pflanzen statt. Dadurch wird stets die optimalste Position für die Wurzeln der Pflanze gegenüber den Pflanzbehälterboden erreicht, in welchem sich das Gemisch aus Wasser, Nährstoffen und Sauerstoff befindet.

Bevorzugt ist die Pflanzfläche als Modul ausgebildet, welches in den Pflanzbehälter eingesetzt und wieder herausgenommen werden kann. Das Modul besteht entweder aus dem Faltenbalg mit mehreren elastischen Falten oder aus mehreren faltbaren Platten, welche durch Gelenkverbindungen miteinander verbunden sind.

Die Module der Pflanzflächen sind von einem Roboter manipulierbar. Beispielsweise kann ein 6-Achs-Roboter mit einem Greifer die Module aus dem Pflanzbehälter entnehmen und in einen anderen Pflanzbehälter umsetzen. Oder das Modul wird von einem Seilgreifer aus dem Pflanzbehälter gehoben und umgesetzt. Es kann beispielsweise auch ein Tray-Stapler eingesetzt werden.

Am Anfang der Wachstumsphase (Keimphase) benötigen die Pflanzen relativ wenig Platz. Dies bedeutet, dass mehrere modulartige Pflanzflächen im gefalteten Zustand zusammen mit den Pflanzen in den Pflanzbehälter eingesetzt werden. Der Raum innerhalb des Pflanzbehälters kann somit optimal ausgenutzt werden. Dadurch können pro Pflanzbehälter mehr Pflanzen mit der gleichen Lichtquelle und der gleichen Klimatisierung kultiviert werden.

Während der Keimphase liegt lediglich ein Saatgut bzw. Sämling vor, welcher sich in einem Substrat befindet. Bevorzugt werden in die Öffnungen der Pflanzfläche ein Substrat-Pad mit dem jeweiligen Saatgut der Pflanz eingesetzt. Hierfür weist die Pflanzfläche eine Öffnung mit einer korbartigen Aufnahme auf. Im gefalteten Zustand der Pflanzfläche erstrecken sich die Faltentäler tief in den Pflanzbehälter hinein. Dadurch kann eine Kontaktierung des Substrat-Pads mit dem Gemisch aus Wasser, Luft und Nährstoffen erfolgen. Das gleiche gilt für die Wurzeln der Setzlinge bzw. jungen Pflanzen, welche deutlich kürzer sind, als bei den ausgewachsenen Pflanzen. Darüber hinaus sind die Pflanzen vorzugsweise im Faltental (=Faltengrund) angeordnet und erhalten durch die beiden angrenzenden, seitlichen Falten einen Halt, was sich insbesondere bei den jungen, schwachen Pflänzchen positiv auswirkt.

Mit zunehmendem Wachstum der Pflanzen wird der Platzbedarf größer. Je nach Anzahl der Module im Pflanzbehälter können diese entweder auseinandergezogen werden und/oder einzelnen aus dem Pflanzbehälter entnommen und in einen weiteren Pflanzbehälter eingesetzt werden.

Bei einer bevorzugten Ausführungsform befinden sich in der Anfangsphase beispielsweise fünf zusammengefaltete Module in einem Pflanzbehälter. Die Pflanzen sind in der Anfangsphase noch sehr klein und benötigen wenig Platz. Insbesondere wenn die Pflanze zunächst nur als Samen vorliegt, welcher sich in einem Pad aus Substrat befindet. Nach circa 10 Tagen werden zwei Module aus dem Pflanzbehälter entnommen und in einen anderen Pflanzbehälter umgesetzt. Gleichzeitig werden die verbleibenden, gefalteten Pflanzflächen, um eine bestimmte Länge auseinandergezogen, wodurch der Winkel zwischen den Falten vergrößert wird. Die Falten öffnen sich und die Pflanzen werden in vertikaler Richtung angehoben. Nach weiteren 10 Tagen wird eine weitere Pflanzfläche aus dem Pflanzbehälter entnommen und in einen anderen Pflanzbehälter eingesetzt. Gleichzeitig werden die verbleibenden, gefalteten Pflanzflächen weiter auseinandergezogen. 10 Tage später wird eine weitere Pflanzfläche aus dem Pflanzbehälter entnommen und in einen anderen Pflanzbehälter eingesetzt. Die gefalteten Pflanzflächen werden nun vollkommen auseinandergezogen, so dass sie eine ebene, horizontale Fläche ausbilden. Die horizontale Fläche stellt den maximalen Abstand zwischen der Pflanzfläche und dem Pflanzbehälterboden dar. Da die Wurzeln ständig gewachsen sind, ist nach wie vor eine Kontaktierung mit dem Gemisch aus Wasser, Nährstoffen und Sauerstoff am Pflanzbehälterboden gegeben.

Die modulartigen, faltbaren Pflanzflächen haben gegenüber dem Stand der Technik einen entscheidenden Vorteil. Während der Wachstumsphase bleiben die Pflanzen immer in der gleichen Öffnung in der Pflanzfläche. Die Wurzeln werden somit nicht beim Umsetzen der modulartigen Pflanzflächen beschädigt. Im Gegensatz hierzu wird beim Stand der Technik die einzelne Pflanze mit Hilfe eines Roboters aus der Pflanzfläche entfernt und in einer neue Pflanzfläche umgesetzt.

Darüber hinaus werden bei der erfindungsgemäßen Ausführungsform ganze Module mit mehreren Pflanzen aus dem Pflanzbehälter entnommen. Dadurch wird insbesondere die Umsetzgeschwindigkeit erhöht.

Die Pflanzfläche besteht vorzugsweise aus einzelnen, faltbaren Platten. Die Platten lassen sich entweder selbstständig falten oder sind über eine Gelenkverbindung miteinander verbunden. Die mindestens eine Gelenkverbindung ist zwischen den zwei angrenzenden Platten entweder im Bereich des Faltentals oder im Bereich der Faltenspitze angeordnet. Durch die Gelenkverbindung können die beiden Platten ausgehend von einem sehr kleinen Winkel (z.B. 10°) bis zu einem sehr großen Winkel (z.B. 180°) geöffnet werden. Die Öffnungen bzw. Ausnehmungen für die einzelnen Pflanzen befinden sich entweder im Faltental, Faltenspitze oder in der Plattenfläche der Pflanzfläche.

Die Pflanzfläche ist das Wachstumsmedium für die Pflanzen, mit welchem die Pflanzen innerhalb des Pflanzbehälters fixiert sind. Die Pflanzfläche besteht beispielsweise aus einem Kunststoff, einem Faserverbundwerkstoff, einem Metallwerkstoff oder einem Naturstoff.

Bei einer bevorzugten Ausführungsform weist die Pflanzfläche eine Aufnahme für das automatisierte Auseinanderziehen- und Zusammenschieben auf. Dies können beispielsweise eine Ausnehmung oder Öse sein, welche leicht von einem Roboter erkennbar und greifbar ist. Ferner besteht die Möglichkeit, dass die Pflanzfläche eine eigene Kupplung aufweist, an welche der Roboter andockt, um die Pflanzfläche zu bewegen. Selbstverständlich kann die Pflanzfläche auch von Hand auseinander und zusammengezogen werden.

Der Pflanzbehälter besteht beispielsweise aus einem (lebensmittelechten) Kunststoff oder einem Metallwerkstoff bzw. Naturwerkstoff. Der Behälter sollte UV-beständig und einen Korrosionsschutz aufweisen. Des Weiteren sollte der Behälter waschbar ausgebildet sein, so dass er mehrmals verwendet werden kann.

Bei einer bevorzugten Ausführungsform weist der Pflanzbehälter eine Führungsvorrichtung auf, welche mit der faltenbaren Pflanzfläche zusammenwirkt. Die Führungsvorrichtung ist entweder stufenlos oder stufenartig ausgebildet. Beispielsweise kann die Führungsvorrichtung als eine Zahnstange ausgebildet sein. Es befindet sich dann entweder eine Zahnstange auf der einen Seite des Pflanzbehälters und auf der gegenüberliegenden Seite lediglich eine glatte Führungsschiene. Die faltbare Pflanzfläche ist dann einseitig arretierbar. Es ist auch möglich, dass sich auf beiden Seiten des Pflanzbehälters jeweils eine Zahnstange befindet, in deren Ausnehmungen einzelne Glieder oder eine Stange der faltbaren Pflanzfläche einsetzbar sind.

Durch die Führungsvorrichtung ist die faltbare Pflanzfläche lösbar in dem Pflanzbehälter angeordnet. Die Führungsvorrichtung hat hierbei zwei Aufgaben. Zum einen wird die Pflanzfläche in vertikaler Richtung innerhalb des Pflanzbehälters positioniert. Die Höhe der Führungsvorrichtung innerhalb des Pflanzbehälters ist so gewählt, dass die Pflanzfläche auseinanderziehbar ist, wobei vorzugsweise die Wurzeln der Pflanzen keinen Kontakt gegenüber dem Pflanzbehälterboden aufweisen. Zum anderen ermöglicht die Führungsvorrichtung ein stufenloses oder stufenartiges Auseinanderziehen und Zusammenfalten der faltbaren Pflanzfläche.

Die Führungsvorrichtung erstreckt sich in Richtung der Längsachse des Pflanzbehälters an den beiden Seitenwänden. Es ist jedoch auch möglich, dass mindestens zwei Führungsvorrichtungen in 90° zur Längsachse des Pflanzbehälters angeordnet sind. Die Führungsvorrichtungen bilden somit ein Art Gitter innerhalb des Pflanzbehälters aus, welches die faltbare Pflanzfläche führt.

Des Weiteren weist der Pflanzbehälter mindestens eine Aufnahme auf, mit welcher er leicht von dem Roboter greifbar, aufnehmbar und absetzbar ist. Die Aufnahme kann beispielweise eine bestimmte Fläche oder eine Ausnehmung im Bodenbereich des Pflanzbehälters sein, welche von dem Lastaufnahmemittel des Transportroboters leicht unterfahren werden kann.

Der erfindungsgemäße Pflanzbehälter wird vorzugsweise in einem Regallager (z.B. Fachbodenregallager) eingesetzt, wobei sich die Pflanzbehälter in vertikal übereinander angeordneten Regallagerplätzen befinden. Die Pflanzbehälter werden innerhalb des Regallagers mit einem Transportroboter bewegt.

Der Transportroboter ist beispielsweise wie der schienengebundene Transportroboter mit Hubplattform gemäß der DE 10 2017 121 638 A1 des gleichen Anmelders ausgebildet, auf welche vollumfänglich Bezug genommen wird. Des Weiteren kann auch ein Transportroboter gemäß der DE 10 2018 109 495 A1 eingesetzt werden, auf welche ebenfalls vollumfänglich Bezug genommen wird.

Bei einer bevorzugten Ausführungsform ist der Transportroboter zweiteilig. Der erste Teil des Transportroboters ist als Fahrwerk für das horizontale Fahren auf Schienen ausgebildet und der zweite Teil weist eine Hub-Plattform mit integriertem Lastenaufnahmemittel auf. Vorzugsweise ist der Transportroboter an der Hallendecke fahrbar angeordnet. Dadurch kann die darunter liegende Lagerfläche anderweitig genutzt werden. Die Ein- und Auslagerung der Pflanzbehälter erfolgt mit einem Lastaufnahmemittel, welches beispielsweise zwei ausfahrbare Zinken aufweist, die den Behälter unterfahren und mittels Zahnriemen präzise auf den Transportroboter laden.

Bei einer weiteren bevorzugten Ausführungsform weisen die Falten der faltbaren Pflanzfläche eine reflektierende Oberfläche auf. Dies bedeutet, dass entweder die faltenartigen Flächen des Faltenbalgs oder die Platten eine reflektierende Oberfläche aufweisen. Durch die reflektierenden und konisch zu einander stehenden Platten bzw. Falten wird die gesamte Lichtfläche auf die Pflanzen konzentriert bzw. die Pflanze auch von unten mit Licht versorgt. Die reflektierenden Flächen können entweder eine besondere Beschichtung oder eine besondere Farbe aufweisen, durch welche das Licht besonderes gut reflektiert bzw. in Richtung der Pflanzen umgeleitet wird.

Der Pflanzbehälter weist ferner mindestens eine Medienkupplung auf, über welcher Energie und/oder Daten/Signale und/oder Nährstoffe, Wasser oder Luft zugeführt werden.

Die Datenübertragung kann auch beispielsweise über eine Funktechnologie erfolgen (z.B. Bluetooth, ZigBee, WLAN, LTE, ISM, narrowband iot, lora etc.)

Der Pflanzbehälter wird mit den Pflanzen vorzugsweise mindestens einmal innerhalb 24 Stunden kontrolliert. Die Kontrolle kann beispielsweise in einer Analysestrasse erfolgen. Hierfür wird der Pflanzbehälter aus dem Regalplatz entnommen und zu einer Analysestrasse gebracht. Die Kontrolle erfolgt optisch mit einer Kamera und anhand des Gewichts mit einer Waage. Des Weiteren können die verschiedensten Daten zur Wasserqualität durch eine Sensorsonde aufgenommen werden. Die gewonnen Daten werden gespeichert und für eine Optimierung des Systems herangezogen. Nach erfolgter Kontrolle wird entschieden, ob die Pflanzen noch ausreichend Platz innerhalb des Pflanzbehälters haben, oder ob mindestens ein Modul aus dem Pflanzbehälter entnommen werden muss und die verbleibenden Module auseinandergezogen werden.

Die Analyse kann jedoch auch auf dem Transportroboter erfolgen. Hier weist der Transportroboter eine Kamera und/oder eine Wiegeeinrichtung und/oder eine Messvorrichtung auf, mit welcher der Zustand der Pflanzen, sowie der Füllstand des Pflanzbehälters festgestellt werden. Diese Daten könnten auch vom Behälter selber an den Roboter gesendet werden. In Abhängigkeit von dem Ergebnis entscheidet dann der Transportroboter, ob der Pflanzbehälter beispielsweise zu einer Nachfüllstation gefahren wird, ein Modul aus dem Pflanzbehälter herausgenommen wird oder ob die faltbare Pflanzfläche weiter auseinandergezogen wird.

Der Transportroboter kann ferner eine Kamera aufweisen, mit welcher ein Schädlingsbefall oder eine Krankheit an der Pflanze festgestellt wird.

Des Weiteren weist die Analysestrasse vorzugsweise eine Dockingstation auf, an welcher der Pflanzbehälter mit seiner Medienkupplung angedockt wird, um Energie und/oder Nährstoffe, Wasser oder Luft nachzufüllen. Ferner können die Daten aus dem Pflanzbehälter ausgelesen werden. Die Energieübertragung könnte auch wireless sein.

Der Pflanzbehälter kann ferner einen eigenen Energiespeicher aufweisen, welcher Energie für z.B. die Bewässerung oder für die Messvorrichtungen speichert und bereitstellt. Das Aufladen des Energiespeichers erfolgt beispielsweise induktiv in der Analysestrasse oder durch die Medienkupplung am Lagerplatz.

Bei der erfindungsgemäßen Ausführungsform können sowohl aktive, als auch passive Bewässerungssysteme eingesetzt werden.

Ein Beispiel für ein passives Bewässerungssystem ist das Dochtsystem, bei welchem die einzelnen Pflanzen in einem Substrat angeordnet sind und über einen Docht mit der darunter befindlichen Nährstofflösung verbunden sind. Durch die Kapillarwirkung des Dochtes wird das Wasser und die Nährstoffe zur Pflanze geführt.

Ein weiteres Beispiel für ein Bewässerungssystem ist eine Bewässerung mit der Nährfilmtechnik NFT (nutrient film technique). Hierbei umspült ein sehr dünner Wasserschwall, der alle für das Pflanzenwachstum notwendigen gelösten Nährstoffe enthält, permanent die freiliegenden Wurzeln im Bodenbereich des Pflanzbehälters.

Ein weiteres Beispiel ist die Zerstäubung mittels Ultraschallvernebler. Der Ultraschallvernebler weist ein piezokeramisches Element (Membran) auf, welches durch Anlegen einer elektrischen Wechselspannung in Schwingung versetzt wird. Diese Schwingung breitet sich auf das umgebende Wasser, bzw. die Nährlösung aus und löst kleine Tropfen von der Oberfläche.

Bei einer bevorzugten Ausführungsform befindet sich im Bodenbereich des Pflanzbehälters ein Hydro-Aero-System, welches aus einem Wasserreservoir und einem Ultraschallzerstäuber besteht. Am Boden des Behälters befindet sich beispielsweise ein 3cm hohes Wasser-Nährstoffgemisch und darüber ein Nebel-LuftGemisch, welches von dem Ultraschallzerstäuber erzeugt wird.

Vorzugsweise wird die Nährstoffversorgung und die Bewässerung für jeden einzelnen Pflanzbehälter separat geregelt. Die Menge der nachzufüllenden Nährstoffe oder des Fluids wird entweder in der Analysestrasse festgestellt oder von der im Pflanzbehälter angeordneten Messvorrichtung.

Es wird zusätzlich ein Schutz für ein Verfahren zur Aufzucht von Pflanzen beansprucht, wobei mindestens eine Pflanzfläche mehrere zueinander parallele Falten aufweist und in der Pflanzfläche eine Vielzahl von im Abstand voneinander angeordneten Öffnungen vorhanden sind, in welche die Pflanzen einsetzbar sind, wobei die Vorrichtung als Pflanzbehälter ausgebildet ist, in dessen Innenraum eine faltbare Pflanzfläche angeordnet ist, welche in horizontaler Richtung zusammenfaltbar und/oder ausziehbar ist.

Im Rahmen des Verfahrens zur Aufzucht von Pflanzen wird der erfindungsgemäße Pflanzbehälter für die Kultivierung von Pflanzen bei einer vertikalen Landwirtschaft eingesetzt.

Des Weiteren wird ein Verfahren zur Aufzucht von Pflanzen beansprucht, wobei in einem Pflanzbehälter mindestens eine faltbare Pflanzfläche mit mehreren zueinander parallele Falten angeordnet ist und sich in der Pflanzfläche eine Vielzahl von im Abstand voneinander angeordneten Öffnungen befinden, in welche die Pflanzen eingesetzt sind, wobei in der Wachstumsphase der Pflanzen folgende Verfahrensschritte ausgeführt werden:
- Anordnen von zumindest teilweise gefalteten Pflanzflächen im Innenraum eines ersten Pflanzbehälters;
- Mit zunehmendem Wachstum der Pflanzen wird mindestens eine Pflanzfläche zusammen mit den eingesetzten Pflanzen aus dem ersten Pflanzbehälter entnommen und in einen zweiten Pflanzbehälter umgesetzt;
- Zumindest teilweises Auseinanderziehen der mindestens einen verbleibenden Pflanzfläche im ersten Pflanzbehälter in horizontaler Richtung, wobei durch das Auseinanderziehen der Pflanzfläche ein Winkel zwischen den zwei benachbarten Falten vergrößert und gleichzeitig sich ein vertikale Abstand zwischen dem Behälterboden des Pflanzbehälters und der Pflanzfläche vergrößert.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, könnten als erfindungswesentlich beansprucht werden, soweit sie einzeln oder in Kombination gegenüber dem Stand der Technik neu sind. Die Verwendung der Begriffe "wesentlich" oder "erfindungsgemäß" oder "erfindungswesentlich" ist subjektiv und impliziert nicht, dass die so benannten Merkmale zwangsläufig Bestandteil eines oder mehrerer Patentansprüche sein müssen.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figuren 1a, 1b, 1c, 1d:: schematische Darstellung eines Pflanzbehälters mit faltbarer Pflanzfläche von der Keimphase bis zur erntereifen Pflanze
- Figuren 2a, 2b, 2c:: schematische Darstellungen des Pflanzbehälters in der Keimphase der Pflanzen
- Figuren 3a, 3b, 3c:: schematische Darstellung des Pflanzbehälters mit Pflanzensprossen
- Figuren 4a, 4b, 4c:: schematische Darstellung des Pflanzbehälters mit jungen Pflanzen
- Figuren 5a, 5b, 5c:: schematische Darstellung des Pflanzbehälters mit erntereifen Pflanzen
- Figur 6:: schematische Darstellung des Pflanzbehälters mit fünf Modulen
- Figur 7:: schematische Darstellung des Pflanzbehälters mit drei Modulen
- Figur 8:: schematische Darstellung des Pflanzbehälters mit einem Modul
- Figur 9:: geschnittene Darstellung des Pflanzbehälters mit Bewässerungsvorrichtung
- Figur 10:: geschnittene Darstellung des Pflanzbehälters mit einem Modul
- Figur 11:: geschnittene Darstellung des Pflanzbehälters mit mehreren Modulen
- Figur 12:: geschnittene Darstellung des Pflanzbehälters mit einem teilweise auseinandergezogenen Modul
- Figur 13:: geschnittene Darstellung des Pflanzbehälters mit vollkommen auseinandergezogenem Modul
- Figur 14:: perspektivische Darstellung eines Regallagers für Pflanzbehälter
- Figur 15:: schematische Darstellung des Gesamtablaufes

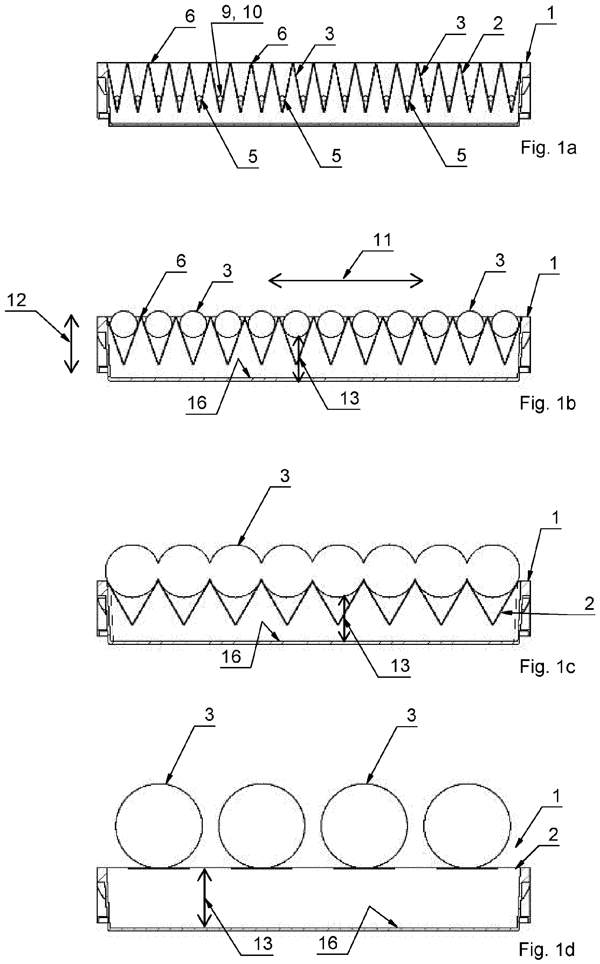

Mit den Figuren 1a, 1b, 1c und 1d wird schematisch jeweils der Pflanzbehälter 1 mit einer faltbaren Pflanzfläche 2 von der Keimphase bis zur erntereifen Pflanze gezeigt.

Figur 1a zeigt den rechteckförmigen Pflanzbehälter 1, welcher bevorzugt aus Kunststoff besteht und flüssigkeits- sowie Lichtdicht ausgebildet ist. In dem Pflanzbehälter 1 befindet sich eine faltbare Pflanzfläche 2, welche aus einzelnen Falten 4 besteht. Durch die Faltbarkeit der Pflanzfläche 2 ist diese expandierbar, d.h. die Pflanzfläche kann verkleinert und vergrößert werden. Die Falten 4 sind miteinander verbunden und bilden gemeinsam einen elastischen Faltenbalg aus. Im Faltental 5 befindet sich eine Öffnung 9 für mindestens eine Pflanze 3. Die Öffnung 9 ist so groß ausgebildet, dass die heranwachsende Pflanze 3 von der Pflanzfläche 2 gehalten und fixiert wird. Vorzugsweise befindet sich im Bereich der Öffnung 9 noch eine Aufnahme 10, in welche ein Substrat-Pad mit einem Samen einsetzbar ist. Die Aufnahme 10 ist beispielsweise korbartig oder gitterförmig ausgebildet, so dass das Substrat in der Aufnahme 10 durch die Gitteröffnungen ausreichend mit der Nährstofflösung 15 unterhalb der Pflanzfläche 2 in Kontakt ist.

Figur 1b zeigt den Pflanzbehälter 1 mit der Pflanzfläche 2, welche in Pfeilrichtung 11 auseinandergezogen wurde. Der Abstand zwischen den Falten 4 wurde damit vergrößert, so dass die gewachsenen Pflanzen 3 mehr Platz und Licht bekommen. Durch das Auseinanderziehen wird gleichzeitig die Pflanzfläche in Pfeilrichtung 12 angehoben, wodurch sich der Abstand 13 zwischen der Pflanzfläche 2 und dem Behälterboden 16 vergrößert.

Figur 1c zeigt den Pflanzbehälter 1 mit einer weiter auseinandergezogenen Pflanzfläche 2. Der Abstand 13 hat sich weiter vergrößert. Die Wurzeln der Pflanzen 3 erhalten dadurch einen größeren Raum unterhalb der Pflanzfläche 2.

Figur 1d zeigt den Pflanzbehälter 1 mit maximal ausgezogener bzw. expandierter Pflanzfläche 2. Die Pflanzen 3 befinden sich nun nicht mehr zwischen den Falten 4, sondern liegen auf einer ebenen Pflanzfläche 2 auf und sind dadurch einfach zu ernten.

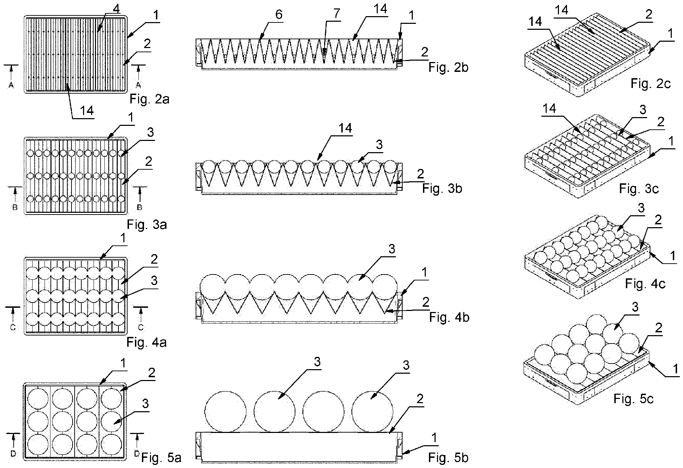

Mit den Figuren 2, 3, 4 und 5 wird der Pflanzbehälter in den verschiedenen Wachstumsphasen der Pflanzen 3 gezeigt.

Die Figuren 2a, 3a, 4a und 5a zeigen jeweils eine Draufsicht auf den Pflanzbehälter 1. Anhand der Draufsichten lässt sich erkennen, dass die Pflanzfläche 2 als Modul 14 ausgebildet ist, wobei gemäß der Figur 2a insgesamt fünf Module 14 innerhalb des Pflanzbehälters 1 angeordnet sind. Mit zunehmendem Wachstum der Pflanzen 3 werden immer weitere Module 14 aus dem Pflanzbehälter 1 entnommen und die verbleibenden Pflanzflächen 2 in dem Pflanzbehälter 1 weiter auseinandergezogen. Dies wird mit der Figur 3a gezeigt, bei welcher sich nur noch drei Module 14 in dem Pflanzbehälter 1 befinden. Gemäß der Figur 4a befinden sich nur noch zwei Module 14 in dem Pflanzbehälter 1 und Figur 5a zeigt einen Pflanzbehälter 1 mit nur noch ein Modul 14 mit einer vollkommen auseinandergezogenen Pflanzfläche 2.

Die Figuren 2b, 3b, 4b und 5b entsprechen den Figuren 1a, 1b, 1c und 1d. Sie zeigen die Pflanzbehälter 1 während der Wachstumsphase der Pflanzen 3.

Mit den Figuren 2c, 3c, 4c und 5c wird der Pflanzbehälter 1 während der Wachstumsphase der Pflanzen 3 perspektivisch dargestellt. Anhand der perspektivischen Ansichten lässt sich erkennen, dass die Pflanzen 3 wachsen und dadurch immer mehr Platz benötigen. Der notwendige Platz wird durch ein Auseinanderziehen der faltbaren Pflanzfläche 2 erreicht. Zusätzlich können einzelne, modulartige Pflanzflächen 3 aus dem Pflanzbehälter 1 entnommen werden und in einen neuen Pflanzbehälter 1 umgesetzt werden.

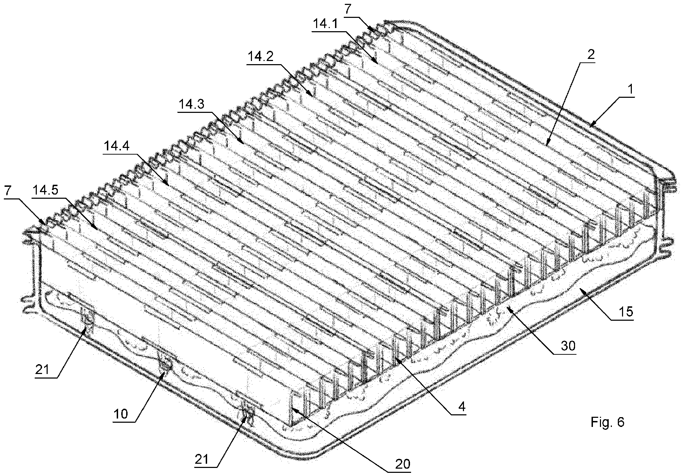

Figur 6 zeigt den Pflanzbehälter 1 in einer geschnittenen Darstellung. Es sind insgesamt fünf Module 14', 14", 14‴, 14ʺʺ, 14‴ʺ innerhalb des Pflanzbehälters 1 angeordnet. Ein Modul 14 besteht aus fünf Stegen 20, welche mit den angrenzenden Falten 4 verbunden sind. Die Stege 20 weisen die Aufnahmen 10 für die Pflanzen 3 auf. Die Aufnahmen 10 sind korbartig ausgebildet, so dass sich die einzelnen Wurzeln 21 der Pflanzen 3 durch die korbartige Aufnahme 10 hindurcherstrecken und mit der Nährstofflösung 15, welche sich im Bereich des Bodenraums 30 befindet, in Kontakt sind.

Die Pflanzen 3 befinden sich somit jeweils zwischen zwei Falten 4, welche die Pflanzen 3 fixieren. Bevorzugt weisen die Falten 4 eine reflektierende Oberfläche auf, mit welcher das Licht gezielt auf die Pflanzen 3 reflektiert wird.

Der Pflanzbehälter 1 weist seitliche Führungsvorrichtungen 7 für die faltbare Pflanzfläche 2 auf. Die Führungsvorrichtung 7 ist gemäß der Figur 6 als Zahnstange ausgebildet, in welche eine Stange 19 der Pflanzfläche 2 eingreift. Durch die Führungsvorrichtung 7 kann die faltbare Pflanzfläche 2 stufenweise auseinandergezogen und zusammengeschoben werden, wobei bei einem Einrasten der Stange 19 zwischen zwei Zähne der Zahnstange die Position der Pflanzfläche 2 fixiert wird.

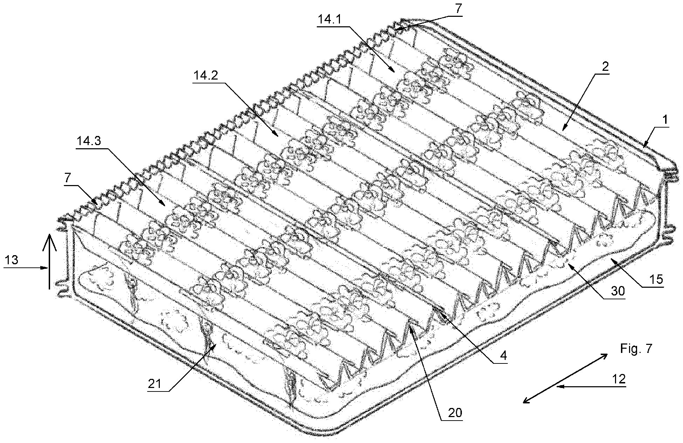

Figur 7 zeigt den Pflanzbehälter 1 mit insgesamt drei Modulen 14', 14" und 14"'. Gegenüber der Darstellung der Figur 6 wurden insgesamt zwei Module 14 aus dem Pflanzbehälter 1 entnommen. Dadurch wurde ein zusätzlicher Raum innerhalb des Pflanzbehälters 1 geschaffen, so dass die verbleibenden Module 14', 14" und 14‴ auseinandergezogen werden können. Die Pflanzen 3 erhalten somit mehr Platz. Durch das Auseinanderziehen der Pflanzflächen 3 in Pfeilrichtung 12 wird gleichzeitig der Abstand 13 zwischen dem Behälterboden 16 und den Öffnungen 10 der Pflanzfläche 2 erhöht. Es findet somit eine Vergrößerung des Bodenraumes 30 statt.

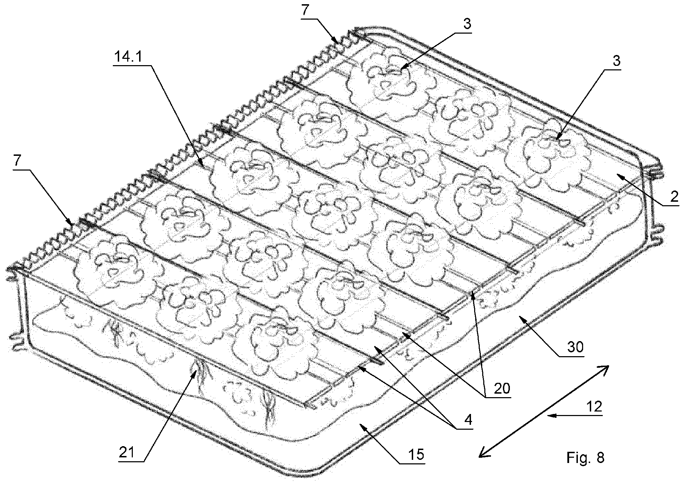

Mit der Figur 8 wird ein Pflanzbehälter mit nur noch einem Modul 14' gezeigt. Die Pflanzfläche 2 des Moduls 14' ist vollkommen auseinandergezogen. Die Stege 20 und die angrenzenden Falten 4 bilden eine Ebene aus, auf welcher die erntereifen Pflanzen 3 aufliegen. Vorzugsweise weist die Pflanzfläche 3 mehrere Stangen 19 auf, welche in die zahnstangenartige Führungsvorrichtung 7 eingreifen. Durch das Eingreifen bzw. Einrasten der Stangen 19 in die Führungsvorrichtung 7 wird ein ungewolltes Zusammenziehen der Pflanzfläche 3 verhindert.

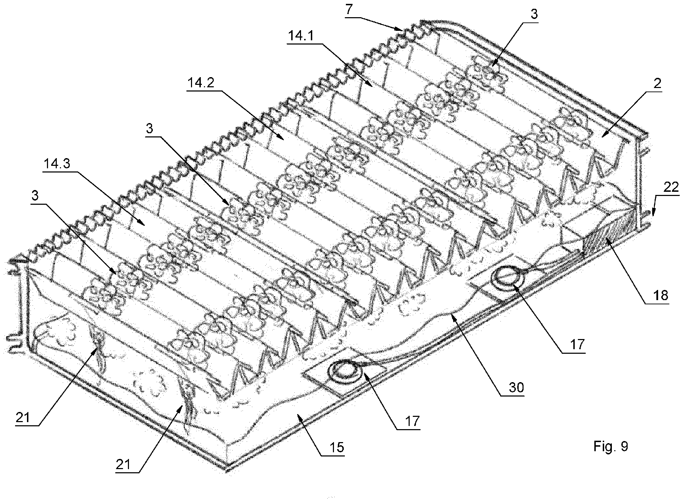

Gemäß der Figur 9 befindet sich im Bodenraum 30 im Bereich des Behälterbodens 15 mindestens eine Bewässerungsvorrichtung 17. Die Bewässerungsvorrichtung 17 ist als Ultraschallzerstäuber ausgebildet und erzeugt unterhalb der Pflanzfläche 2 ein Gemisch aus Luft und der Nährstofflösung 15, welches von den Wurzeln 21 der Pflanzen 3 aufgenommen wird. Die Energie für die Bewässerungsvorrichtung 17 kommt von einem Energiespeicher 18. Der Energiespeicher 18 wird über eine Medienkupplung 18 mit Energie aufgeladen. Durch den Energiespeicher 18 ist der Pflanzbehälter 1 autark ausgebildet. Dies bedeutet, dass der Pflanzbehälter 1 während er Aufzucht der Pflanzen 3 lediglich eine Lichtquelle benötigt.

Der Pflanzbehälter 1 kann ferner mehrere Medienkupplungen 18 aufweisen, über welche z.B. die Nährstofflösung nachgefüllt wird. Des Weiteren ist es möglich, dass der Pflanzbehälter 1 eine eigene Messvorrichtung aufweist, mit welcher z.B. der Füllstand der Nährstofflösung, die Temperatur, die Lichtintensität oder dergleichen gemessen wird.

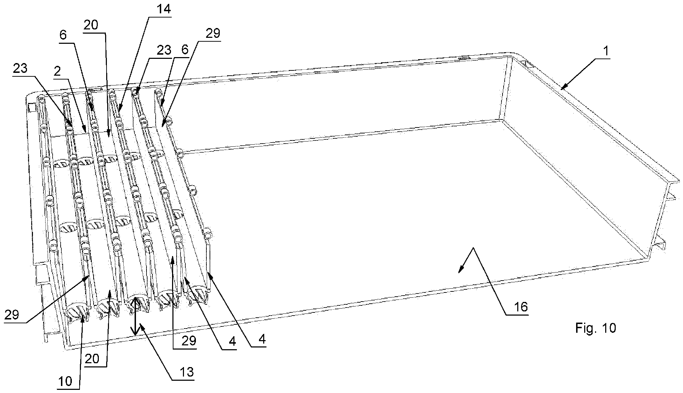

Mit der Figur 10 wird der Pflanzbehälter 1 mit einer faltbaren Pflanzfläche 2 gezeigt, welche als Modul 14 ausgebildet ist. Die Pflanzfläche 2 besteht aus einzelnen Falten 4, welche über Gelenkverbindungen mit Stegen 19 verbunden sind. Zwei Falten 4 und ein Steg 19 bilden zusammen eine U-förmige Pflanzreihe aus. Gemäß der Figur 10 weist das Modul 14 insgesamt fünf nebeneinander angeordnete Pflanzreihen 24 auf.

Durch die seitlichen Führungsvorrichtungen 7 des Pflanzbehälters 1 sind die Pflanzreihen 24 beabstandet vom Behälterboden 16 angeordnet. Durch den Abstand können die Wurzeln 21 der Pflanzen 3 optimal mit einem Gemisch aus Luft und der Nährstofflösung versorgt werden.

Im Bereich der Faltenspitze 6 weist die Pflanzfläche 3 einzelne Gelenkverbindungen 23 auf, welche zwei Falten 4 miteinander verbinden. Die Gelenkverbindungen 23 können zusätzliche Einschübe aufweisen, durch welche die Stangen 19 für die Führungsvorrichtung 7 durchgesteckt werden. Vorzugsweise weist jede Faltenspitze 6 einen Einschub 2 auf, so dass die Führung der Pflanzfläche 3 individuell angepasst werden kann.

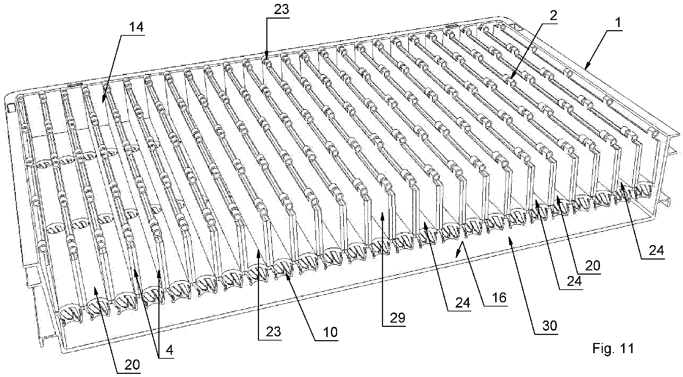

Figur 11 zeigt den Pflanzbehälter 1 mit mehreren Modulen 14, wie er beispielsweise in der Keimphase der Pflanzen 3 eingesetzt wird. Gemäß der Figur 11 befinden sich viele Pflanzreihen 24 nebeneinander in dem Pflanzbehälter 1. Dadurch können viele Pflanzen 3 mit der gleichen Lichtquelle beleuchtet werden. Damit wird der Platz innerhalb des Pflanzbehälters 1 optimal ausgenutzt und es können die Stromkosten für die Beleuchtung der Pflanzen eingespart werden. Darüber hinaus befinden sich die Pflanzen 3 in diesem Zustand der Pflanzreihen 24 tief im Pflanzbehälter 3, so dass die Pflanzen 3 ausreichende mit der am Behälterboden 16 befindlichen Nährstofflösung 15 kontaktiert werden.

Gemäß der Figur 11 sind die Falten 4 der Pflanzfläche 3 als Platten 29 ausgebildet, welche durch mindestens eine Gelenkverbindung 23 miteinander verbunden sind.

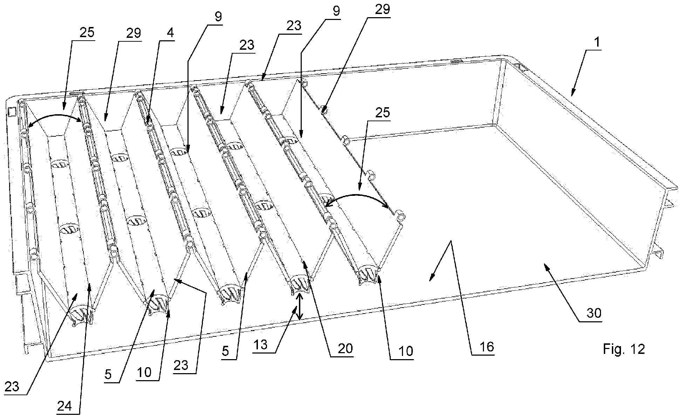

Figur 12 zeigt den Pflanzbehälter 1 mit einer teilweise auseinandergezogenen Pflanzfläche 3. Zwei Falten 4 und der dazwischenliegende Steg 20 bilden zusammen eine Pflanzreihe 24 aus. Die erste Falte 4 und zweite Falte 4 sind um einen Winkel 25 teilweise geöffnet. Die Pflanzreihen 24 sind über Gelenkverbindungen 23 miteinander verbunden.

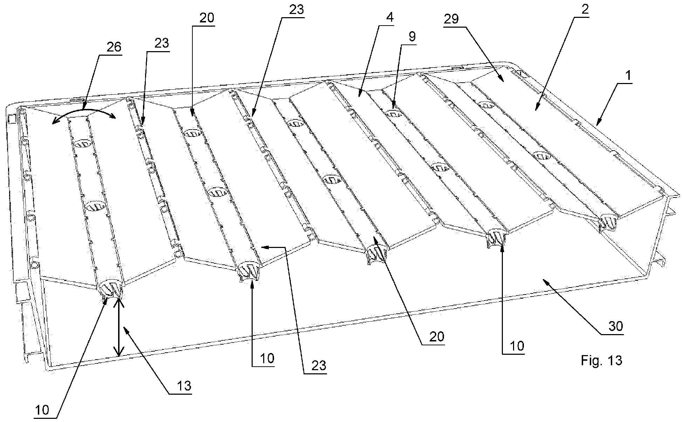

Figur 13 zeigt den Pflanzbehälter 1 mit einer vollkommen auseinandergezogenen Pflanzfläche 3. Die Falten 4 der Pflanzreihen 23 sind nun um einen Winkel 26 geöffnet. Der Winkel 25 ist größer als der Winkel 25 gemäß der Figur 12.

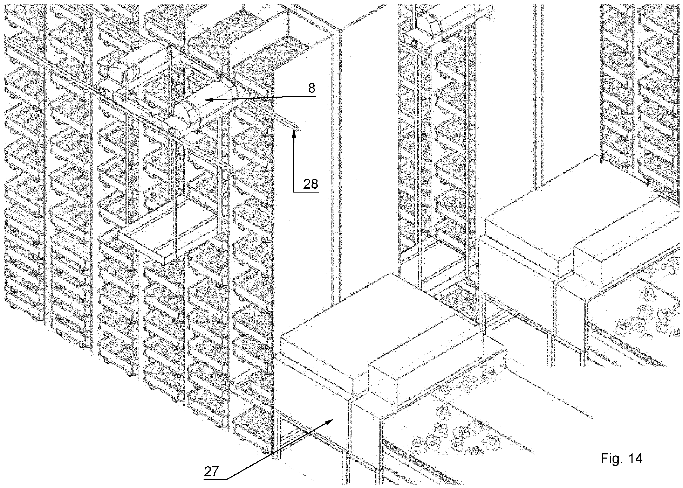

Mit der Figur 14 wird eine Regallager mit einem Transportroboter 8 dargestellt, der in einer Schienenbahn 28 autonom verfahrbar angetrieben ist. Der Transportroboter 8 besteht im Wesentlichen aus einem etwa rechteckförmigen Rahmen, in dem eine mittlere Ausnehmung angeordnet ist, die beidseits von zwei einander gegenüber liegenden Hubeinrichtungen begrenzt ist. Aus der mittleren Ausnehmung kann eine Hubplattform angehoben und abgesenkt werden. Auf der Hubplattform sind Lastaufnahmemittel angeordnet, welche als zwei voneinander beabstandete Teleskoparme ausgebildet sind, die heraus- und hereinfahrbar sind. Mit Hilfe der Lastaufnahmemittel werden die Pflanzbehälter 3 an der Unterseite untergriffen und auf die Oberfläche der Hubplattform gezogen. Sobald ein solcher Lade- oder Entladevorgang stattgefunden hat, kann die Hubplattform durch die Hubeinrichtungen hochgezogen werden, so dass sich der Pflanzbehälter 1 danach im Innenraum des Transportroboters 8 befindet und der Transportroboter 8 mit hochgezogener Hubplattform an andere Stellen der Schienenbahn 28 fährt.

Bei einer bevorzugten Ausführungsform wird das Modul 14 der faltbaren Pflanzfläche 3 mit dem Transportroboter 8 in den Pflanzbehälter 1 eingesetzt oder entnommen. Hierfür weist der Transportroboter eine spezielle Greifvorrichtung auf.

Mit dem erfindungsgemäßen Pflanzbehälter 1 mit der faltbaren Pflanzfläche 3 ist es nun möglich mehr Pflanzen 3 auf der gleichen Fläche mit einer Lichtquelle zu beleuchten. Dies wird durch die auseinanderziehbare Pflanzfläche 3 erreicht, wobei die Anzahl an Pflanzreihen 24 an den jeweiligen Wachstumszustand und Platzbedarf der Pflanzen 3 anpassbar ist. Da sich die Pflanzen 3 während der gesamten Wachstumsphase stets in der gleichen Öffnung der Pflanzfläche 3 befinden, findet keine Schädigung der Wurzeln 21 statt. Darüber hinaus können automatisiert mehrere Pflanzen 3 auf einmal aus dem Pflanzbehälter 3 entnommen werden und in einen neuen Pflanzbehälter 3 umgesetzt werden.

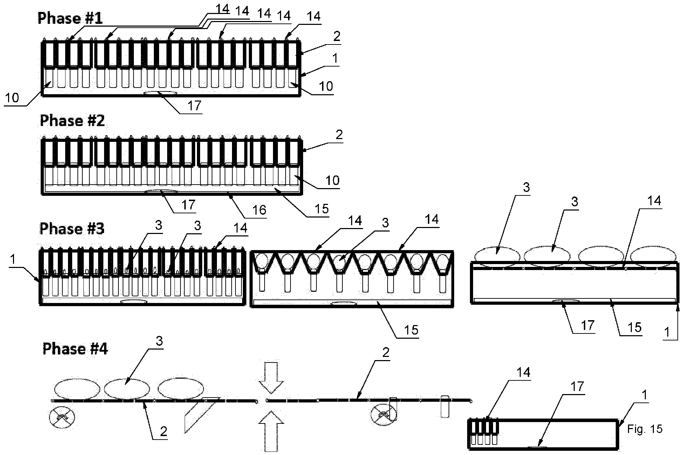

Mit der Figur 15 wird der Gesamtablauf des Verfahrens zur Aufzucht von Pflanzen gezeigt. In der Phase #1 befinden sich die Samen für die Pflanzen 3 in einem Substrat den jeweiligen Aufnahmen 10 der Pflanzfläche 2. Der Pflanzbehälter 2 weist noch kein Nährstofflösung 16 oder dergleichen auf. In diesem Zustand können die Pflanzbehälter 2 über einen längeren Zeitraum gelagert werden. Die Samen der Pflanzen 3 werden je nach Bedarf durch die Zugabe von Wasser bzw. Nährstofflösung 15 aktiviert.

Die Phase #2 zeigt die Keimungsphase der Pflanzen 3. Am Behälterboden 16 befindet sich eine Nährstofflösung 15, welche zumindest teilweise mit dem Substrat bzw. der Pflanze 3 in der Aufnahme 10 der Pflanzfläche 2 in Kontakt ist. Zusätzlich befindet sich am Behälterboden 16 eine Bewässerungsvorrichtung 17, welche ein Gemisch aus Luft und der Nährstofflösung 15 erzeugt. Die Pflanzbehälter 1 können nun während der Wachstumsphase in ein Regallager gebracht werden.

Phase #3 zeigt die Wachstumsphasen der Pflanzen 3, wobei im ersten, linken Pflanzbehälter 1 aufgrund der kleinen Pflanzengröße noch insgesamt fünf Module 14 der Pflanzfläche 2 befinden. Durch das Wachstum der Pflanzen 3 wird der Platzbedarf im Pflanzbehälter 1 immer größer, so dass einzelne Module 14 aus dem Pflanzbehälter 1 entnommen werden und die verbleibenden Module 14 auseinandergezogen werden. Während der Wachstumsphase werden die Pflanzen 3 in der Pflanzfläche 2 analysiert und ggf. Nährstofflösung 16 nachgefüllt oder einzelne Pflanzflächen 2 aus dem Pflanzbehälter 1 entnommen. Im mittleren Pflanzbehälter 1 befinden sich daher nur noch zwei Module 14. Der rechte Pflanzbehälter 1 weist nur noch ein Modul 14 auf. Die Pflanzfläche 2 des rechten Pflanzbehälters 1 ist vollkommen auseinandergezogen. Auf der Pflanzfläche 1 liegen nun die erntereifen Pflanzen 3 auf.

Die Phase #4 ist die Aufbereitungsphase, im Rahmen welcher die Pflanzen 3 geerntet werden. Nach der erfolgten Ernte der Pflanzen 3 werden die Pflanzbehälter 1 gewaschen und mit neuen Pflanzflächen 2 bestückt. Im Anschluss daran werden die Pflanzbehälter 1 wieder eingelagert (vgl. Phase #1).

### Zeichnungslegende

1. Pflanzbehälter
2. Pflanzfläche
3. Pflanze
4. Falte
5. Faltental
6. Faltenspitze
7. Führungsvorrichtung
8. Transportroboter
9. Öffnung
10. Aufnahme
11. Pfeilrichtung (horizontal)
12. Pfeilrichtung (vertikal)
13. Abstand
14. Modul
15. Nährstofflösung
16. Behälterboden
17. Bewässerungsvorrichtung
18. Energiespeicher
19. Stange
20. Steg
21. Wurzel
22. Medienkupplung
23. Gelenkverbindung
24. Pflanzreihe
25. Winkel (teilweise geöffnet)
26. Winkel (teilweise geöffnet)
27. Regallager
28. Schienenbahn
29. Platten
30. Bodenraum

## Patentansprüche

1. Vorrichtung zur Aufzucht von Pflanzen (3), bestehend aus mindestens einer faltbaren Pflanzfläche (2), welche in den Innenraum eines Pflanzbehälters (1) anordnenbar ist, wobei die Pflanzfläche (2) mehrere zueinander parallele Falten (4) aufweist und in der Pflanzfläche (2) eine Vielzahl von im Abstand voneinander angeordneten Öffnungen (9) vorhanden sind, in welche die Pflanzen (3) einsetzbar sind, **dadurch gekennzeichnet, dass** jeweils zwei parallele Falten (4) eine Pflanzreihe (24) ausbilden und zwischen den beiden Falten (4) die Öffnungen (9) für die Pflanzen (3) sind und dass die faltbare Pflanzfläche (2) in horizontaler Richtung (11) ausziehbar ist, wobei durch das Auseinanderziehen die Pflanzfläche (2) angehoben wird und sich ein Abstand (13) zwischen der Pflanzfläche (2) und einem Behälterboden (16) des Pflanzbehälters (1) vergrößert.

2. Vorrichtung nach Anspruch 1, **dadurch gekennzeichnet, dass** zwischen den beiden benachbarten Falten (4) ein Winkel (25, 26) besteht, wobei sich durch das Auseinanderziehen der Pflanzfläche (2) der Winkel (25, 26) zwischen den benachbarten Falten (4) vergrößert und gleichzeitig sich der vertikaler Abstand (13) zwischen dem Behälterboden (16) des Pflanzbehälters (1) und der Pflanzfläche (2) vergrößert.

3. Vorrichtung nach Anspruch 1 oder 2, **dadurch gekennzeichnet, dass** der Pflanzbehälter (1) als einseitig offener, durch umlaufende, randseitige Wände abgegrenzter transportabler Pflanzbehälter (1) ausgebildet ist, in dessen Bodenraum (30) eine Nährstofflösung (15) zur Aufzucht der Pflanzen (3) angeordnet ist, wobei der Bodenraum (30) nach oben durch die Pflanzfläche (2) mindestens teilweise abgedeckt ist.

4. Vorrichtung nach einem der Ansprüche 1 bis 3, **dadurch gekennzeichnet, dass** mehrere modulartige Pflanzflächen (2) im gefalteten Zustand zusammen mit den Pflanzen (3) in einen Pflanzbehälter (1) einsetzbar sind.

5. Vorrichtung nach einem der Ansprüche 1 bis 4, **dadurch gekennzeichnet, dass** die Pflanzfläche (2) als elastischer Faltenbalg ausgebildet.

6. Vorrichtung nach einem der Ansprüche 1 bis 4, **dadurch gekennzeichnet, dass** die Falten (4) der Pflanzfläche (2) als Platten (29) ausgebildet sind, welche durch mindestens eine Gelenkverbindung (23) miteinander verbunden sind.

7. Vorrichtung nach einem der Ansprüche 1 bis 4, **dadurch gekennzeichnet, dass** die Falten (4) der Pflanzfläche (2) als Platten (29) ausgebildet sind und dass zwischen zwei Platten (29) ein Steg (20) mit den Öffnungen (9) für die Pflanzen (3) angeordnet ist, wobei die Platten (29) und der Steg (29) durch mindestens eine Gelenkverbindung (23) miteinander verbunden sind.

8. Vorrichtung nach einem der Ansprüche 1 bis 7, **dadurch gekennzeichnet, dass** die Pflanzfläche (2) als Modul (14) ausgebildet ist, welches in den Pflanzbehälter (1) einsetzbar oder aus dem Pflanzbehälter (1) entnehmbar ist.

9. Vorrichtung nach einem der Ansprüche 1 bis 8, **dadurch gekennzeichnet, dass** die faltbare Pflanzfläche (2) in horizontaler Richtung (11) zusammenfaltbar und ausziehbar ist.

10. Vorrichtung nach einem der Ansprüche 1 bis 9, **dadurch gekennzeichnet, dass** die faltbare Pflanzfläche (2) mit einem Transportroboter (8) in den Pflanzbehälter (1) einsetzbar oder entnehmbar ist und/oder mit einem Transportroboter (8) in horizontaler Richtung (11) zusammenfaltbar und/oder ausziehbar ist

11. Vorrichtung nach einem der Ansprüche 1 bis 10, **dadurch gekennzeichnet, dass** zumindest die Falten (4) der Pflanzfläche (2) eine reflektierende Oberfläche aufweisen.

12. Vorrichtung nach einem der Ansprüche 1 bis 11, **dadurch gekennzeichnet, dass** der Pflanzbehälter (1) mindestens eine Führungsvorrichtung (7) für die Pflanzfläche (2) aufweist.

13. Verfahren zur Aufzucht von Pflanzen (3), wobei mindestens eine faltbare Pflanzfläche (2) mehrere zueinander parallele Falten (4) aufweist und in der Pflanzfläche (2) eine Vielzahl von im Abstand voneinander angeordneten Öffnungen (9) vorhanden sind, in welche die Pflanzen (3) einsetzbar sind, wobei die Pflanzfläche (2) in den Innenraum eines Pflanzbehälters (1) anordnenbar ist und in horizontaler Richtung (11) zusammenfaltbar und/oder ausziehbar ist, **dadurch gekennzeichnet, dass** jeweils zwei parallele Falten (4) eine Pflanzreihe (24) ausbilden und zwischen den beiden Falten (4) die Öffnungen (9) für die Pflanzen (3) sind und dass die faltbare Pflanzfläche (2) in horizontaler Richtung (11) ausziehbar ist, wobei durch das Auseinanderziehen die Pflanzfläche (2) angehoben wird und sich ein Abstand (13) zwischen der Pflanzfläche (2) und einem Behälterboden (16) des Pflanzbehälters (1) vergrößert.

14. Verfahren zur Aufzucht von Pflanzen (3), **dadurch gekennzeichnet, dass** eine Vorrichtung nach einem der Ansprüche 1 bis 12 für die Kultivierung von Pflanzen (3) bei einer vertikalen Landwirtschaft eingesetzt wird.

15. Verfahren zur Aufzucht von Pflanzen (3), wobei in einem Pflanzbehälter (1) mindestens eine faltbare Pflanzfläche (2) mit mehreren zueinander parallele Falten (4) angeordnet ist und sich in der Pflanzfläche (2) eine Vielzahl von im Abstand voneinander angeordneten Öffnungen (9) befinden, in welche die Pflanzen (3) eingesetzt sind, wobei in der Wachstumsphase der Pflanzen (3) folgende Verfahrensschritte ausgeführt werden:
• Anordnen von zumindest zwei teilweise gefalteten Pflanzflächen (2) im Innenraum eines ersten Pflanzbehälters (1);
• Mit zunehmendem Wachstum der Pflanzen (3) wird mindestens eine Pflanzfläche (2) zusammen mit den eingesetzten Pflanzen (3) aus dem ersten Pflanzbehälter (1) entnommen und in einen zweiten Pflanzbehälter (1) umgesetzt;
• Zumindest teilweises Auseinanderziehen der mindestens einen verbleibenden Pflanzfläche (2) im ersten Pflanzbehälter (1) in horizontaler Richtung (11), wobei durch das Auseinanderziehen der Pflanzfläche (2) ein Winkel (25, 26) zwischen den zwei benachbarten Falten (4) vergrößert wird und gleichzeitig sich ein vertikale Abstand (13) zwischen dem Behälterboden (16) des Pflanzbehälters (1) und der Pflanzfläche (2) vergrößert.

## Claims

1. Device for cultivating plants (3) consisting of at least one foldable planting surface (2) which can be arranged in the interior of a planting container (1), wherein the planting surface (2) has several folds (4) parallel to one another and a plurality of openings (9) arranged at a distance from one another, into which the plants (3) can be inserted, are present in the planting surface (2), **characterised in that** respectively two parallel folds (4) form a planting row (24) and the openings (9) for the plants (3) are between the two folds (4) and **in that** the foldable planting surface (2) can be pulled out in a horizontal direction (11), wherein the planting surface (2) is raised by pulling apart and a distance (13) between the planting surface (2) and a container base (16) of the planting container (1) is increased.

2. Device according to claim 1, **characterised in that** an angle (25, 26) exists between the two adjacent folds (4), wherein the angle (25, 26) between the adjacent folds (4) is increased by pulling apart the planting surface (2) and at the same time the vertical distance (13) between the container base (16) of the planting container (1) and the planting surface (2) is increased.

3. Device according to claim 1 or 2, **characterised in that** the planting container (1) is designed as a transportable planting container (1) open on one side and delimited by annular, edge-side walls, in the base space (30) of which planting container (1) is arranged a nutrient solution (15) for cultivating the plants (3), wherein the base space (30) is at least partly covered at the top by the planting surface (2).

4. Device according to one of claims 1 to 3, **characterised in that** several modular planting surfaces (2) can be inserted into a planting container (1) in the folded state together with the plants (3).

5. Device according to one of claims 1 to 4, **characterised in that** the planting surface (2) is designed as elastic bellows.

6. Device according to one of claims 1 to 4, **characterised in that** the folds (4) of the planting surface (2) are designed as plates (29) which are connected to one another by at least one hinge connection (23).

7. Device according to one of claims 1 to 4, **characterised in that** the folds (4) of the planting surface (2) are designed as plates (29) and **in that** a bar (20) with the openings (9) for the plants (3) is arranged between two plates (29), wherein the plates (29) and the bar (29) are connected to one another by at least one hinge connection (23).

8. Device according to one of claims 1 to 7, **characterised in that** the planting surface (2) is designed as a module (14) which can be inserted into the planting container (1) or can be removed from the planting container (1).

9. Device according to one of claims 1 to 8, **characterised in that** the foldable planting surface (2) can be folded together and can be pulled out in the horizontal direction (11).

10. Device according to one of claims 1 to 9, **characterised in that** the foldable planting surface (2) can be inserted into the planting container (1) or can be removed using a transport robot (8) and/or can be folded together and/or can be pulled out in the horizontal direction (11) using a transport robot (8).

11. Device according to one of claims 1 to 10, **characterised in that** at least the folds (4) of the planting surface (2) have a reflective surface.

12. Device according to one of claims 1 to 11, **characterised in that** the planting container (1) has at least one guide device (7) for the planting surface (2).

13. Method for cultivating plants (3), wherein at least one foldable planting surface (2) has several folds (4) parallel to one another and a plurality of openings (9) arranged at a distance from one another, into which the plants (3) can be inserted, are present in the planting surface (2), wherein the planting surface (2) can be arranged in the interior of a planting container (1) and can be folded together and/or pulled out in a horizontal direction (11), **characterised in that** respectively two parallel folds (4) form a planting row (24) and the openings (9) for the plants (3) are between the two folds (4) and **in that** the foldable planting surface (2) can be pulled out in the horizontal direction (11), wherein the planting surface (2) is raised by pulling apart and a distance (13) between the planting surface (2) and a container base (16) of the planting container (1) is increased.

14. Method for cultivating plants (3), **characterised in that** a device according to one of claims 1 to 12 for cultivating plants (3) is used in vertical farming.

15. Method for cultivating plants (3), wherein at least one foldable planting surface (2) with several folds (4) parallel to one another is arranged in a planting container (1) and a plurality of openings (9) arranged at a distance from one another, into which the plants (3) are inserted, are located in the planting surface (2), wherein in the growth phase of the plants (3) the following method steps are executed:
• arranging at least two partly folded planting surfaces (2) in the interior of a first planting container (1);
• with increasing growth of the plants (3), at least one planting surface (2) together with the inserted plants (3) is removed from the first planting container (1) and transplanted into a second planting container (1);
• at least partial pulling apart of the at least one remaining planting surface (2) in the first planting container (1) in a horizontal direction (11), wherein an angle (25, 26) between the two adjacent folds (4) is increased by pulling apart of the planting surface (2) and at the same time a vertical distance (13) between the container base (16) of the planting container (1) and the planting surface (2) is increased.

## Revendications

1. Dispositif de culture de plantes (3), constitué d'au moins une surface de plantation pliable (2), laquelle peut être disposée dans l'espace intérieur d'un contenant à plantes (1), dans lequel la surface de plantation (2) présente plusieurs plis (4) parallèles les uns aux autres, et dans la surface de plantation (2) sont présentes une pluralité d'ouvertures (9) disposées à distance les unes des autres dans lesquelles les plantes (3) peuvent être insérées, **caractérisé en ce qu'**à chaque fois, deux plis (4) parallèles réalisent une rangée de plantation (24) et les ouvertures (9) pour les plantes (3) sont entre les deux plis (4), et que la surface de plantation (2) pliable est étirable dans la direction horizontale (11), dans lequel la surface de plantation (2) est relevée par l'étirement et une distance (13) entre la surface de plantation (2) et un fond de contenant (16) du contenant à plantes (1) est augmentée.

2. Dispositif selon la revendication 1, **caractérisé en ce qu'**il existe un angle (25, 26) entre les deux plis (4) adjacents, dans lequel l'angle (25, 26) entre les plis (4) adjacents est augmenté par l'étirement de la surface de plantation (2) et, dans le même temps, la distance verticale (13) entre le fond de contenant (16) du contenant à plantes (1) et la surface de plantation (2) est augmentée.

3. Dispositif selon la revendication 1 ou 2, **caractérisé en ce que** le contenant à plantes (1) est réalisé en tant que contenant à plantes (1) transportable, ouvert d'un côté, délimité par des parois périphériques côté bord, dans l'espace de fond (30) duquel une solution nutritive (15) est disposée pour cultiver les plantes (3), dans lequel l'espace de fond (30) est recouvert au moins en partie vers le haut par la surface de plantation (2).

4. Dispositif selon l'une des revendications 1 à 3, **caractérisé en ce que** plusieurs surfaces de plantation modulaires (2) à l'état plié peuvent être insérées avec les plantes (3) dans un contenant à plantes (1).

5. Dispositif selon l'une des revendications 1 à 4, **caractérisé en ce que** la surface de plantation (2) est réalisée en tant que soufflet élastique.

6. Dispositif selon l'une des revendications 1 à 4, **caractérisé en ce que** les plis (4) de la surface de plantation (2) sont réalisés en tant que plaques (29), lesquelles sont reliées les unes aux autres par au moins une liaison articulée (23).

7. Dispositif selon l'une des revendications 1 à 4, **caractérisé en ce que** les plis (4) de la surface de plantation (2) sont réalisés en tant que plaques (29) et qu'une entretoise (20) comprenant les ouvertures (9) pour les plantes (3) est disposée entre deux plaques (29), dans lequel les plaques (29) et l'entretoise (29) sont mutuellement reliées par au moins une liaison articulée (23).

8. Dispositif selon l'une des revendications 1 à 7, **caractérisé en ce que** la surface de plantation (2) est réalisée en tant que module (14), lequel peut être inséré dans le contenant à plantes (1) ou peut être enlevé du contenant à plantes (1).

9. Dispositif selon l'une des revendications 1 à 8, **caractérisé en ce que** la surface de plantation (2) pliable est repliable et étirable dans la direction horizontale (11).

10. Dispositif selon l'une des revendications 1 à 9, **caractérisé en ce que** la surface de plantation (2) pliable est installable par un robot de transport (8) dans le contenant à plantes (1), ou retirable de ce dernier, et/ou est repliable et/ou étirable par un robot de transport (8) dans la direction horizontale (11).

11. Dispositif selon l'une des revendications 1 à 10, **caractérisé en ce qu'**au moins les plis (4) de la surface de plantation (2) présentent une surface réfléchissante.

12. Dispositif selon l'une des revendications 1 à 11, **caractérisé en ce que** le contenant à plantes (1) présente au moins un dispositif de guidage (7) pour la surface de plantation (2).

13. Procédé de culture de plantes (3), dans lequel au moins une surface de plantation (2) pliable présente plusieurs plis (4) parallèles les uns aux autres et dans la surface de plantation (2) sont présentes une pluralité d'ouvertures (9) disposées à distance les unes des autres dans lesquelles les plantes (3) peuvent être insérées, dans lequel la surface de plantation (2) peut être disposée dans l'espace intérieur d'un contenant à plantes (1) et est repliable et/ou étirable dans la direction horizontale (11), **caractérisé en ce qu'**à chaque fois, deux plis (4) parallèles réalisent une rangée de plantation (24) et les ouvertures (9) pour les plantes (3) sont entre les deux plis (4), et que la surface de plantation (2) pliable est étirable dans la direction horizontale (11), dans lequel la surface de plantation (2) est relevée par l'étirement et une distance (13) entre la surface de plantation (2) et un fond de contenant (16) du contenant à plantes (1) est augmentée.

14. Procédé de culture de plantes (3), **caractérisé en ce qu'**un dispositif selon l'une des revendications 1 à 12 pour la culture de plantes (3) est utilisé dans le cas d'une agriculture verticale.

15. Procédé de culture de plantes (3), dans lequel au moins une surface de plantation (2) pliable comprenant plusieurs plis (4) parallèles les uns aux autres est disposée dans un contenant à plantes (1) et une pluralité d'ouvertures (9) disposées à la distance les unes des autres dans lesquelles les plantes (3) sont
insérées se trouvent dans la surface de plantation (2), dans lequel dans la phase de croissance des plantes (3), des étapes de procédé suivantes sont effectuées :
- agencer au moins deux surfaces de plantation (2) pliées en partie dans l'espace intérieur d'un premier contenant à plantes (1) ;
- au fur et à mesure de la croissance des plantes (3), enlever le premier contenant à plantes (1) et transférer dans un deuxième contenant à plantes (1) au moins une surface de plantation (2) avec les plantes (3) insérées ;
- étirer au moins partiellement l'au moins une surface de plantation (2) restante dans le premier contenant à plantes (1) dans la direction horizontale (11), dans lequel un angle (25, 26) entre les deux plis (4) adjacents est augmenté par l'étirement de la surface de plantation (2) et, dans le même temps, une distance verticale (13) entre le fond de contenant (16) du contenant à plantes (1) et la surface de plantation (2) est augmentée.
